# EUROPEAN PATENT APPLICATION

(11) **EP 4 353 575 A1**
(43) Date of publication of application: **17.04.2024**
(21) Application number: 22200936.7
(22) Date of filing: 11.10.2022
(51) Int. Cl.: B62K 21/16

(54) **BICYCLE STEM**

(71) Applicant: Koninklijke Gazelle N.V., 6951 BP Dieren (NL)
(72) Inventor: KRAAIJVANGER, Herman Martheus, 6951 BP DIEREN (NL); DE GROOT, Stef Cornelis, 6951 BP DIEREN (NL)
(74) Representative: De Vries & Metman

(57) **Abstract**

Bicycle stem (5) for connecting the handlebar (2) of a bicycle (1) to the steerer tube (4) of said bicycle. The bicycle stem comprises a first stem section (6) connectable to the steerer tube, and a second stem section (7) with one end rotatably connectable to the first stem section and an opposite end (20) for holding the handlebar. A clamp body (28) is connected to the second stem section by at least one tightener (30) for moving the clamp body relative to the second stem section between a clamping position where it clamps against the first stem section to fixate the second stem section (7) relative to the first stem section (6), and a release position. A bias element (33) biases the clamp body towards the release position.

## Description

The invention relates to a bicycle stem. A bicycle stem connects the handlebar to the steerer tube of the bicycle fork. The invention also relates to a bicycle comprising such a bicycle stem.

CN216508841 discloses an example of a bicycle stem. With this bicycle stem, a set screw 9 is used to clamp the handlebar against a clamp 11 to fixate the handlebar in a tilted position. Since the handlebar is tilted about its own central axis, this tilting does not change its height. The clamp does not automatically release when the set screw is loosened.

DE202019102840 discloses a bicycle stem allowing tilting of the handlebar about a horizontal axis at a distance from the central axis of the handlebar. This way, tilting results in height adjustment. The handlebar can be fixated in the desired height position by clamping. Once clamped, it is relatively cumbersome to change the height position of the handlebar. The risk of play is significant with this construction.

The object of the invention is to provide a user friendly height adjustment system which can easily be adjusted to a different height position.

The object of the invention is achieved with a bicycle stem for connecting the handlebar of a bicycle to the steerer tube of said bicycle, the stem comprising:
- a first stem section on top of the steerer tube;
- a second stem section with one end rotatably connectable to the first stem section and an opposite end for holding the handlebar;
- a clamp body (28) connected to the second stem section by at least one tightener (30), such as one or more set screws, for moving the clamp body relative to the second stem section between a clamping position where it clamps against the first stem section to fixate the second stem section (7) relative to the first stem section (6), and a release position; and
- a bias element, such as a spring, biasing the clamp body towards the release position.

Since the bias element biases the clamp body to the release position, the handlebar can be freely rotated until the handlebar is in the desired height position. The clamp body can then be fastened by tightening the tightener against the action of the bias element.

The second stem section can for example be mounted to the first section by means of an axle essentially parallel to the handlebar, allowing height adjustment of the handlebar by tilting the second section of the bicycle stem.

In a specific embodiment, the first stem section comprises a top end with openings, e.g., threaded openings, for holding the axle of the second stem section. The first stem section has a semi-cylindrical outer surface which is coaxial with the axle, and which engages the clamp body in the clamping position. The clamp body can be provided with a concave surface matching the semi-cylindrical surface so as to provide a large clamping surface. Optionally, the semi-cylindrical outer surface and the clamp body can be provided with matching ribbings or teeth.

The semi-cylindrical top end of the first stem section can for example be formed by two parallel top flanges separated by a recess. In a more specific example, the first stem section comprises two symmetrical, semi-cylindrical halves to be clamped around the top end of the front fork steerer tube and secured to the steerer tube by means of a central bolt. The two halves are both provided with one of the top flanges which have a central opening for receiving and fixing the axle of the second stem section, e.g., by screwing or clamping. The two top flanges with the central openings are parallel and aligned and are spaced from one another by the afore mentioned recess.

Optionally, the first section further comprises an outer casing hiding the inner body from view and visually connecting to the head tube at its lower end and to the second section at its top end.

Optionally, the clamp body may have an opening in line with the recess, and the bias element comprises a leaf spring fixed to an inner face of the second stem section by means of a fastener passing the opening in the clamp body. The leaf spring overlaps the clamp body at a position between the two parallel flanges.

In a further embodiment, the second stem section has a V-shaped body with two legs and a cavity where the two legs join, the cavity receiving the top end of the first stem section. The legs of the V-shaped body can for example have free ends with passage openings for receiving the handlebar. The tighteners or set screws of the clamp body can for example be accessible at a position between the two legs of the V-shaped body. Optionally, the two legs of the V-shaped body have inner surfaces facing each other, and a liner, e.g., of a rubber-like or plastic material, covering said inner surfaces.

The invention further relates to a bicycle comprising a handlebar, a steerer tube and a stem as described above connecting the handlebar to the steerer tube. A display, e.g., for displaying speed and/or battery status, can for example be mounted on the handlebar between two legs of a V-shaped body of the stem.

The invention will be further explained with reference to the accompanying drawings showing an exemplary embodiment.
Figure 1: shows a bicycle with a handlebar and a stem according to the present invention;
Figure 2: shows the stem of Figure 1 as a separate part;
Figure 3: shows a cross section of the stem of Figures 1 and 2;
Figure 4: shows the stem of Figures 1-3 in a first perspective cross section;
Figure 5: shows the stem of Figures 1-4 in a second perspective cross section;
Figure 6: shows the stem of Figures 1-5 in exploded view.

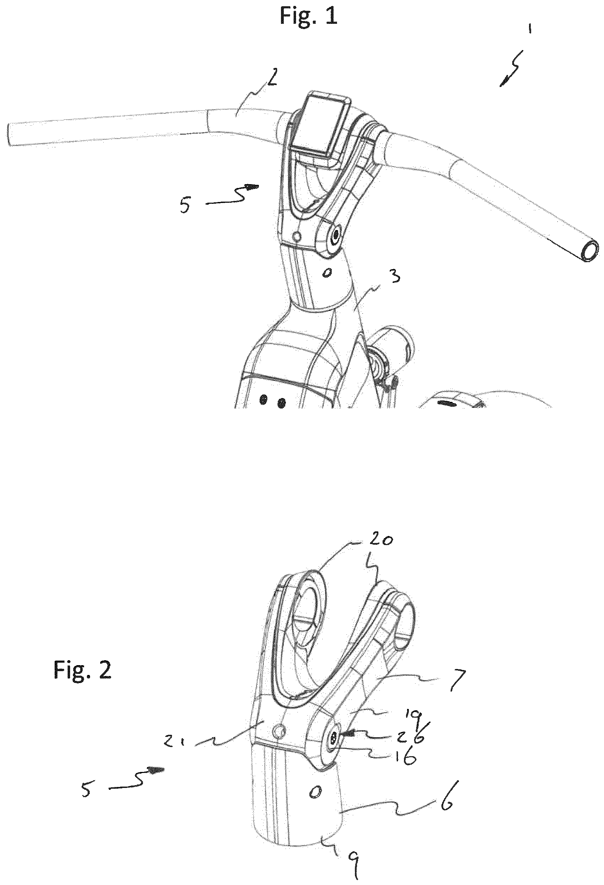

Figure 1 shows a bicycle 1 having a handlebar 2, a headset 3, a steerer tube (not shown) and a bicycle stem 5 connecting the handlebar 2 to the steerer tube.

The bicycle stem 5 is shown separately in Figure 2 and has a lower first stem section 6 connected to the steerer tube 4 and a V-shaped upper second stem section 7 holding the handlebar 2.

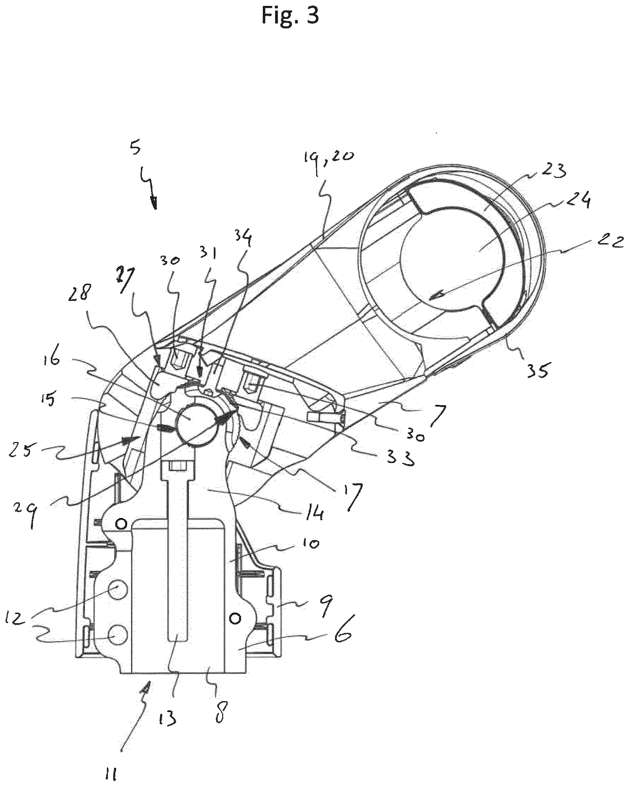

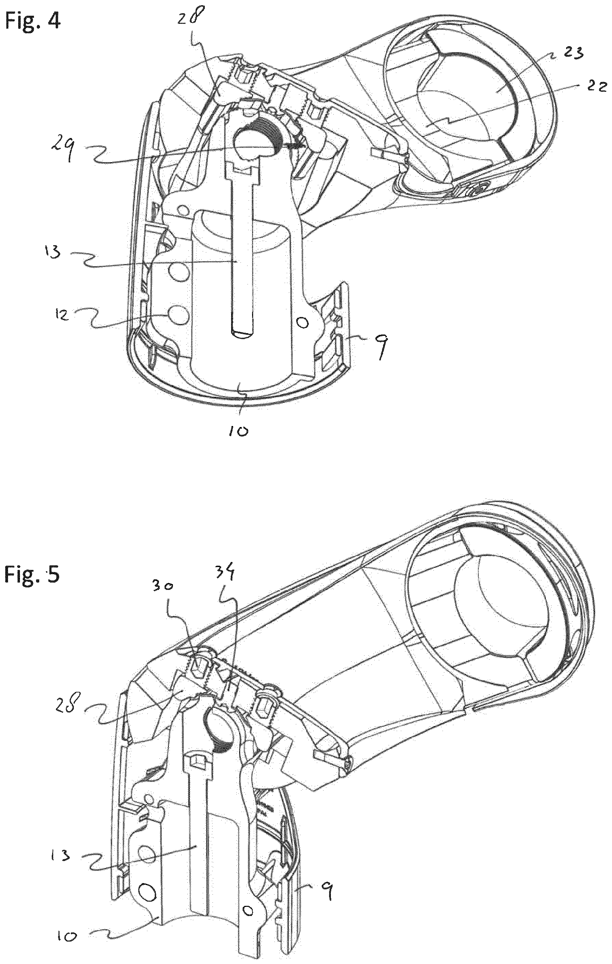

As shown in Figures 3-5, the first stem section 6 has an inner body 8 connected to the steerer tube by means of a central bolt 13 engaging a star nut (not shown) in the steerer tube (see Figure 3), and an outer casing 9 visually integrated with the headset 3 and hiding the inner body 8 from view.

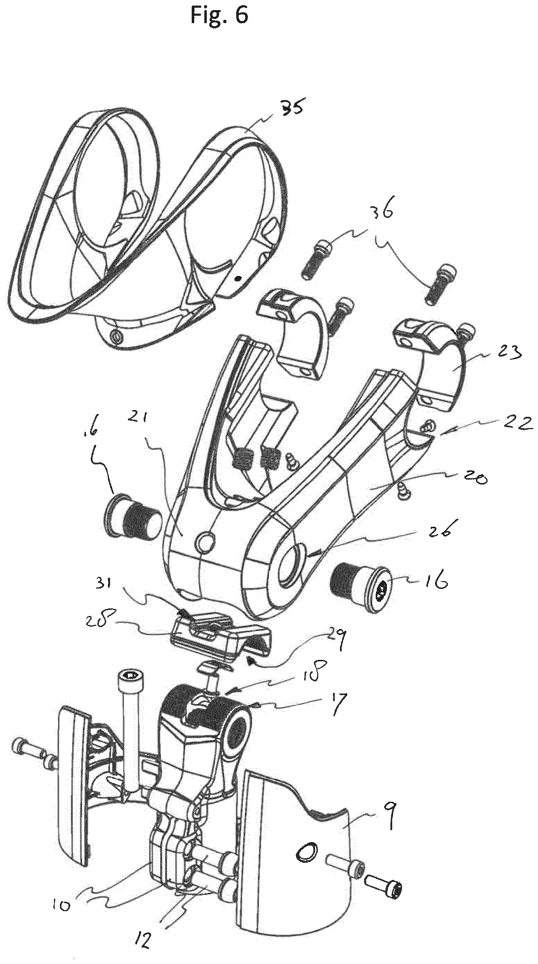

The inner body 8 of the first stem section 6 comprises two symmetrical, semi-cylindrical halves 10, jointly defining a cylindrical space 11 for receiving the top end of the steerer tube 4. The two halves 10 are clamped around the top end of the steerer tube 4 by means of tightening bolts received in bolt openings 12. Both halves 10 have a top flange 14 with a threaded opening 15 for holding a stub axle 16, and a semi-cylindrical top surface 17 which is coaxial with the two aligned stub axles 16. These semi-cylindrical top surfaces 17 are ribbed. The two top flanges 14 are spaced by a recess 18 (see Figure 6) giving access to the central bolt 13.

The second stem section 7 has a V-shaped body 19 with two legs 20 and a root section 21 where the two legs 20 join. The legs 20 of the V-shaped body 19 have free ends with aligned C-shaped recesses 22 (Figure 6). C-shaped parts 23 (Figure 3) are connected to the free ends. The C-shaped parts 23 and the C-shaped recesses 22 jointly form passage openings 24 for receiving the handlebar 2.

The root section 21 of the V-shaped body 19 comprises a cavity 25 for receiving the top flanges 14 of the inner body 8 of the first stem section 6. The root section 21 is provided with passages 26 for the stub axles 16. These passages 26 are aligned with the threaded openings 15 in the top flanges 14 of the inner body 8.

The cavity 25 of the root section 21 has a bottom surface 27 facing the ribbed semi-cylindrical top surfaces 17 of the top flanges 14 of the inner body 8. A clamp body 28 is positioned between the bottom surface 27 of the cavity 25 and the ribbed top surfaces 17 of the top flanges 14. The clamp body 28 has a concave clamping surface 29 matching the semi-cylindrical top surfaces 17 of the top flanges 14. The clamping surface 29 of the clamp body 28 is provided with ribs matching with the ribs of the top flanges 14.

A pair of set screws 30 can be used to move the clamp body 28 between a clamping position and a release position. The clamp body 28 has a central passage opening 31 aligned with the recess 18 between the two top flanges 14, and aligned with a threaded opening 32 in the bottom surface 27 of the cavity 25. A bias element 33 - in the shown embodiment formed by a leaf spring - extends along the surface of the clamp body 28 in the area of the recess 18 between the top flanges 14. A fastener 34 extends via an opening in the leaf spring 33 and the central passage opening 31 in the clamp body 28 into the threaded opening 32 of the bottom surface 27 of the cavity 25 and fixates the leaf spring 33 in such manner that the tips of the leaf spring 33 move with the clamp body 28.

The clamp body 28 can be tightened by tightening the set screws 30 so as to move the clamp body 28 against the action of the leaf spring 33 to force the clamp body 28 against the ribbed top surfaces 17 of the top flanges 14. In this clamping position, the ribbings of the top end surfaces 17 of the top flanges 14 interlock with the matching ribbings of the clamp body 28, so as to lock the V-shaped second stem section 7 with the handlebar 2 in the adjusted height position.

When the set screws 30 are loosened, the leaf spring 33 pulls the clamp body 28 away from the ribbed top flanges 14 and the handlebar 2 can be rotated to adjust its height. After the desired adjustment, the set screws 30 can be tightened again to maintain the handlebar 2 in its new position.

The inner surfaces of the V-shape 19 are covered by a plastic lining 35 also covering the C-shape parts 23 in the desired position on the respective C-shaped ends 22. The liner 35 is connected to the V-shape section 19 by means of screws 36.

As shown in Figure 1, a display 37 can be mounted between the diverging legs 20 of the V-shaped body 19, e.g., for displaying riding parameters, such as driving speed, battery status, etc.

## Claims

1. Bicycle stem (5) for connecting the handlebar (2) of a bicycle (1) to the steerer tube (4) of said bicycle, the bicycle stem comprising:
- a first stem section (6) connectable to the steerer tube;
- a second stem section (7) with one end rotatably connectable to the first stem section and an opposite end (20) for holding the handlebar;
- a clamp body (28) connected to the second stem section by at least one tightener (30), such as one or more set screws, for moving the clamp body relative to the second stem section between a clamping position where it clamps against the first stem section to fixate the second stem section (7) relative to the first stem section (6), and a release position;
- a bias element (33) biasing the clamp body towards the release position.

2. Bicycle stem according to claim 1, wherein the first stem section (6) comprises a top end with openings (15) for holding an axle, such as a pair of aligned stub axles (16), and with a semi-cylindrical outer surface (17) which is coaxial with the axle (16), and which engages the clamp body (28) in the clamping position.

3. Bicycle stem according to claim 2, wherein the semi-cylindrical outer surface (17) and the clamp body (28) are provided with matching ribs or teeth.

4. Bicycle stem according to claim 2 or 3, wherein the top end of the first stem section (6) is formed by two parallel top flanges (14) separated by a recess (18),
wherein the clamp body (28) has an opening (31) in line with the recess,
wherein the bias element comprises a leaf spring (33) fixed to an inner face (27) of the second stem section (7) by means of a fastener (34) passing the opening in the clamp body (28),
wherein the leaf spring overlaps the clamp body at a position between the two parallel top flanges (14).

5. Bicycle stem according to any one of the preceding claims, wherein the second stem section (7) has a V-shaped body (19) with two legs (20) and a root section (21) where the two legs (20) join, the root section comprising a cavity (25) receiving the top end (14) of the first stem section (6) .

6. Bicycle stem according to claim 5, wherein the legs (20) of the V-shaped body (19) have free ends (24) with passage openings for holding the handlebar (2).

7. Bicycle stem according to claim 5 or 6, wherein the one or more tighteners (33) of the clamp body (28) are accessible at a position between the two legs (20) of the V-shaped body (19).

8. Bicycle stem according to claim 5, 6 or 7, wherein the two legs (20) of the V-shaped body (19) have inner surfaces facing each other, and a liner (35), e.g., of a plastic or rubber-like material, covering said inner surfaces.

9. Bicycle (1) comprising a handlebar (2), a steerer tube (4) and a bicycle stem (5) according to anyone of the preceding claims connecting the handlebar to the steerer tube.

10. Bicycle according to claim 9, comprising a display (37) mounted on the handlebar (2) between two legs (20) of a V-shaped body (19) of the bicycle stem (5).
